Europäisches Patentamt

European Patent Office

Office européen des brevets

(11) Veröffentlichungsnummer: **0 561 015 A1**

## (12) EUROPÄISCHE PATENTANMELDUNG

(21) Anmeldenummer: **92104558.9**

(22) Anmeldetag: **17.03.92**

(51) Int. Cl.⁵: **G01B 11/06**, G01B 9/02

(43) Veröffentlichungstag der Anmeldung:
**22.09.93 Patentblatt 93/38**

(84) Benannte Vertragsstaaten:
**DE FR GB**

(71) Anmelder: **International Business Machines Corporation**
**Old Orchard Road**
**Armonk, N.Y. 10504(US)**

(72) Erfinder: **Makosch, Günter, Dipl.-Phys.**
**Stuttgarter Strasse 40**
**W-7032 Sindelfingen-Maichingen(DE)**

(74) Vertreter: **Klocke, Peter, Dipl.-Ing.**
**IBM Deutschland Informationssysteme**
**GmbH Patentwesen und Urheberrecht**
**Pascalstrasse 100**
**D-70569 Stuttgart (DE)**

(54) **Interferometrische Phasenmessung.**

(57) Es wird eine neue Phasenmeßmethode beschrieben, die die Phasendifferenz zwischen zwei polarisierten Lichtstrahlen (21, 22) bestimmt und im Gegensatz zu bisher bekannten Phasenschalttechniken auf einer parallelen Signalauswertung beruht. Dazu werden die Lichtstrahlen durch einen Strahlteiler (12) zunächst in mehrere Teilstrahlenpaare (31, 41) (32, 42) (33, 43) (34, 44) (35, 45) aufgefächert, die mit einer Linse (13) als parallele Strahlbündel (19, 20) auf lichtempfindliche Sensoren (16) fokussiert werden. Zwischen der Linse und den Sensoren ist ein Phasenschieber (14) und ein Polarisator (15) vorgesehen. Phasenunterschiede der Lichtstrahlen (21, 22) führen so zu Intensitätsdifferenzen der parallelen Strahlenbündel (19, 20) die von den Sensoren (16) detektiert werden. Das neue Verfahren ermöglicht hohe Messgeschwindigkeit und Messgenauigkeit.

FIG. 2

Die Erfindung liegt auf dem Gebiet optischer Meßgeräte. Insbesondere bezieht sich die Erfindung auf Interferometeranordnungen, die Phasendifferenzen zwischen unterschiedlich polarisierten Lichtstrahlen erfassen.

Bei zahlreichen Fertigungsprozessen werden zur Charakterisierung und Messung von Oberflächen zunehmend digitale Interferometer eingesetzt. Diese optischen Messgeräte zeichnen sich vor allem durch eine hohe Messgenauigkeit aus. Für den Einsatz in der Produktion ist entscheidend, daß diese Geräte berührungslos messen und damit zerstörungsfrei sind und voll automatisiert werden können. Der Anwendungsbereich umfasst sowohl Stufenhöhenmessungen und Profilhöhenmessungen im Nanometerbereich, als auch Messungen kleinster Verschiebungen in einer Ebene (Alignment- und Overlay-Messungen).

Ein Messgerät dieser Art ist das in EP-A-11708 beschriebene Laser Spot Scanning Interferometer (LASSI). Das Messprinzip beruht auf einer scannenden Abtastung der zu untersuchenden Oberfläche mit zwei gleichzeitig nebeneinander auf der Oberfläche fokussierten Laserlicht-bündeln. Die optische Phasendifferenz zwischen den beiden Lichtwellen, die von der Oberfläche reflektiert werden, ändert sich dabei linear mit der Höhendifferenz zwischen den beiden Laserpunkten auf der Oberfläche. Mittels einer Phasenschalttechnik wird die Phasendifferenz bestimmt. Dazu wird ein elektro-optischer Lichtmodulator verwendet, der die Phasendifferenz zwischen den beiden Lichtwellen periodisch um einen festen Betrag verschiebt. Gleichzeitig wird die Intensität der beiden zur Interferenz kommenden Lichtbündel mit einer Photodiode gemessen. Sind $P_S$, $P_R$ und $P_T$ die Lichtleistungen, die bei den Phasenverschiebungswerten $\phi = 0, \pm\frac{2}{3}\pi$ gemessen werden, so bestimmt sich die zu messende Phasendifferenz

$$\phi_M = \frac{4\pi}{\lambda} h \text{ , mit} \qquad (1)$$

$\lambda$     als Lichtwellenlänge und
$h$     als Höhendifferenz
nach folgender Gleichung:

$$\varphi_M = \tan^{-1}\left[\frac{\sqrt{3}\,(P_R - P_T)}{2P_S - P_R - P_T}\right] \bmod 2\pi \quad . \qquad (2)$$

Die rechnerische Bestimmung des Phasenmesswertes nach dieser Beziehung erfolgt beispielsweise mit Hilfe eines PC-Controllers.

Das oben beschriebene Phasenmessverfahren liefert den exakten Phasenmesswert $\phi_M$ und damit den zu bestimmenden Hoehendifferenzwert $h$, wenn die Modulationsspannung am Modulator tatsächlich die Phase periodisch um $\pm\frac{2}{3}\pi$ verändert. In der Praxis ist jedoch diese Schaltspannung keine konstante Größe. Ebenso wie die Halbwellenspannung des Modulators, ist die Schaltspannung abhängig von der Umgebungstemperatur leichten Schwankungen ausgesetzt, die mehr als 5% der Nennspannung betragen können. Um Fehlereinflüsse bei der Phasenmessung durch diesen Effekt gering zu halten, muß häufig durch einen automatischen Eichvorgang die Halbwellenspannung neu definiert werden.

Bei dynamischen Messungen eines sich schnell verändernden Phasenmesswertes tritt zusätzlich ein anderer Fehler auf, der durch die sequentielle Messwertverarbeitung bedingt ist. Während eines Phasenmessvorgangs beträgt die Zeit zur Messung der drei Lichtleistungswerte $P_S$, $P_R$ und $P_T$ einige Millisekunden. Während dieser Zeit muß aber der zu messende Phasenwert $\phi_M$ unverändert bleiben. Bei einer scannenden Profilhöhenmessung kann das durch eine entsprechend langsame Vorschubbewegung des Messobjektes erreicht werden. Bei unvorhersehbaren schnellen Phasenaenderungen ist dieser Fehlereinfluss jedoch nicht vermeidbar.

Die vorliegende Erfindung geht von der Phasendetektierung dieser Meßanordnung als nächstliegendem Stand der Technik aus. Ihr liegt die Aufgabe zugrunde, eine verbesserte optische Phasenmessung und Vorrichtung zu entwickeln, die die Nachteile der bisherigen Meßtechnik vermeidet.

Die erfindungsgemäße und beanspruchte Methode und Vorrichtung zur Phasenmessung, beruht auf einer parallelen Signalaufnahme und Signal-prozessierung. Unterschiedlich polarisierte Lichtstrahlen werden dazu jeweils zunächst ueber einen Strahlteiler in mehrere Teilstrahlen zerlegt oder mit einem Beugungsgitter in mehrere Beugungsordnungen aufgefächert, die dann z.B. mit einer Linse, vorzugsweise als lateral versetzte, parallel verlaufende Strahlbündel, auf lichtempfindliche Sensoren fokussiert werden. Zwischen der Linse und den Sensoren ist ein Phasenschieber und ein Polarisationsfilter angeordnet. Mit Hilfe des Phasenschiebers werden die Phasen der einzelnen parallelen Strahlbündel (in Abhängigkeit von ihrer Lage und Polarisation) unterschiedlich versetzt.

Durch das nachgeschaltete Polarisationsfilter führen so Phasenunterschiede zwischen den Teilstrahlen zu Intensitätsänderungen der von den Sensoren detektierten parallelen Strahlenbündel. Aus dem synchron registrierten Intensitätsmuster der Teilstrahlen läßt sich die Phasendifferenz der Lichtstrahlen direkt bestimmen.

Neben einer hohen Messgeschwindigkeit gewährleistet das erfindungsgemäße Phasenmessverfahren eine hohe Messgenauigkeit und ermöglicht eine kompakte Bauweise entsprechend der Phasenmessanordnung.

Das erfinderische Phasenmessverfahren wird nachfolgend am Beispiel einer bevorzugten Ausführung einer Messanordnung zur Stufen- und Profilhöhenmessung unter Bezugnahme auf die Zeichnungen erläutert:

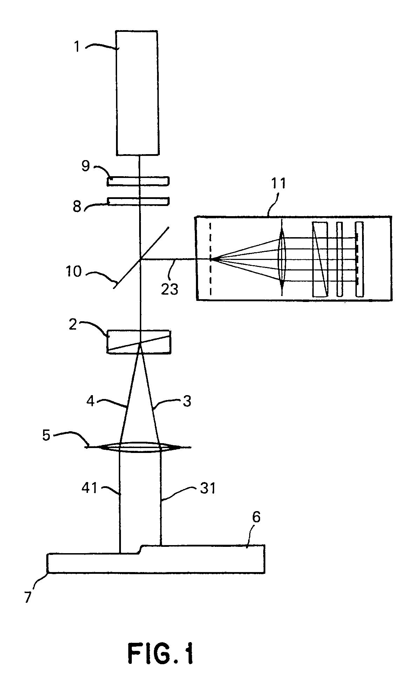

Figur 1    ist die schematische Darstellung einer Oberflächenmeßanordnung mit synchroner Signalauswertung;

Figur 2    zeigt den Aufbau des erfindungsgemäßen optischen Phasendetektors;

Figur 3    ist ein Ausführungsbeispiel des in dem Phasendetektor verwendeten Phasenschiebers.

Der Strahl eines linear polarisierten Lasers (1) wird beim Passieren eines Wollaston Prismas (2) in zwei senkrecht zueinander polarisierte Lichtstrahlen (3, 4) aufgespalten, die mit Hilfe der Linse (5) als zwei parallele Lichtbündel (31, 41) auf der Oberfläche (6) des zu vermessenden Objektes (7) fokussiert werden. Mit Hilfe eines kontinuierlichen Lichtabschwächers bestehend aus Polarisator (8) und drehbarer Halbwellenplatte (9) lässt sich die absolute und relative Lichtintensität der beiden Lichtbündel geeignet regeln. Bei der Reflexion an der Oberfläche entsteht zwischen den zwei Lichtbündeln eine optische Phasendifferenz $\phi_M$, die gemäß Gleichung (1) direkt proportional zur Höhendifferenz h zwischen den Laserlicht-punkten auf der Oberfläche ist. Nach der Reflexion werden die Strahlen durch das Wollaston Prisma wieder zusammengeführt und an dem Strahlenteilerspiegel (10) als überlagerter Lichtstrahl (23) in den Detektorarm (11) der Anordung reflektiert.

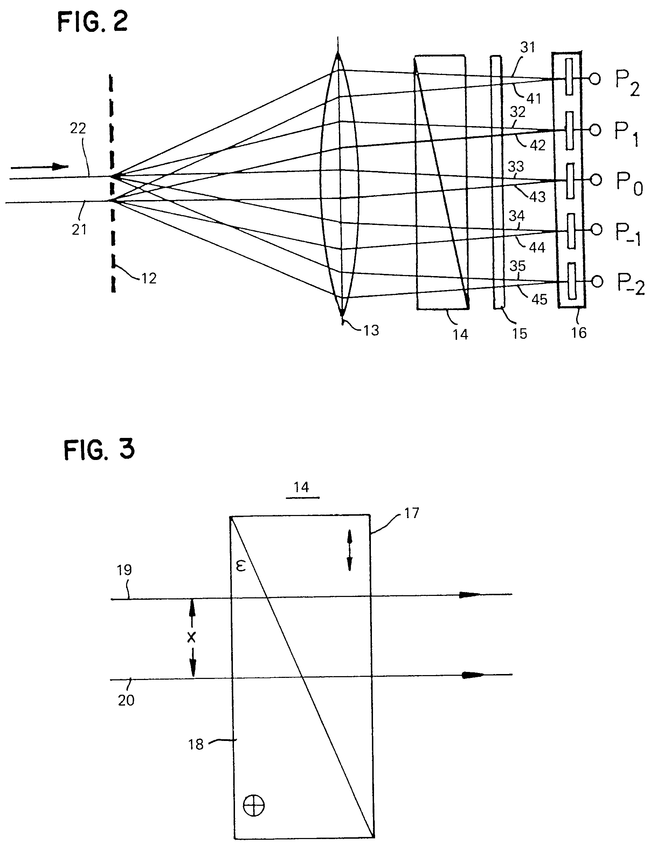

Entsprechend der hier vorgeschlagenen Phasenmessmethode wird die Phasendifferenz zwischen dem Paar reflektierter Lichtstrahlen (21, 22), aus denen sich der einfallende Lichtstrahl (23) zusammensetzt, mit Hilfe der in Fig. 2 schematisch dargestellten Messanordnung bestimmt. Diese besteht aus einem Transmissions-Beugungsgitter (12), das die einfallenden Lichtstrahlen (21, 22) in mehrere Paare von Beugungsordnungen (31, 41) (32, 42) (33, 43) (34, 44) (35, 45) auffächert, einer Linse (13), die die Beugungsordnungen als achsenparallele Lichtbündel gleichen Abstands auf einen Zeilendetektor (16) fokussiert, dem Polarisator (15) und einem phasenschiebenden optischen Element (14). Dieser Phasenschieber ist nach dem Prinzip des Babinet-Kompensators aufgebaut (Fig. 3). Er setzt sich aus zwei doppelbrechenden Keilplatten (17, 18) zusammen, die sich zu einer Planparallelplatte ergänzen. Die optischen Achsen der beiden Keilplatte stehen senkrecht zueinander und verlaufen parallel zu den Grenzflächen der Platte. Beim senkrechten Durchgang durch die Platte erfahren zwei senkrecht zueinander polarisierte Teilwellen eines Laserstrahls einen Gangunterschied oder eine Phasendifferenz, die gegeben ist durch

$$\phi = \frac{4\pi}{\lambda}(n_e - n_0)x \tan \epsilon \qquad (3)$$

wobei

$\lambda$       die Lichtwellenlänge,

$n_o, n_e$    der Brechungsindex des ordentlichen bzw. außerordentlichen Strahls im Kristall,

$x$       der Abstand von der Plattenmitte und

$\epsilon$       der Prismenwinkel der Keilplatten (17, 18) ist.

Jede der Beugungsordungen, die in der oben beschriebenen Anordnung den Phasenschieber passiert, setzt sich aus zwei senkrecht polarisierten Teilkomponenten zusammen, deren Phasendifferenz $\phi_M$ beträgt. Abhängig vom Ort x, an dem die Beugungsordnungen die Platte durchsetzen erfahren die beiden Komponenten eine zusätzliche Phasenverschiebung $\phi$ zueinander, die durch Gleichung (3) definiert ist. Dabei ist wegen der Äquidistanz der Beugungsordnungen der Phasenzuwachs zwischen zwei benachbarten Paaren von Beugungsordnungen (19, 20) konstant. Durch eine geeignete Wahl des Prismenwinkels $\epsilon$ kann bei einem gegebene Abstand der Beugungsordnungen der Phasenzuwachs gleich $\frac{\pi}{2}$ gewählt werden. Unter der Annahme, daß die nullte Beugungsordnung die phasenschiebende Platte in deren Mitte durchsetzt, an der Stelle x = 0, und demzufolge keine Phasenschiebung erfährt, erfahren die zwei Teilkomponenten der -2-ten Beugungsordnung zueinander die Phasenverschiebung $-\pi$, der -1-ten $-\frac{\pi}{2}$, der +1-ten $\frac{\pi}{2}$, der +2-ten $\pi$.

Nachdem die Beugungsordnungen den unter 45° zu ihren Schwingungsrichtungen orientierten Polarisator passiert haben, sind ihre Lichtleistungen, die mit dem Zeilendetektor gemessen werden, durch folgende Gleichungen gegeben:

$$P_{-2} = K_2(A + B\cos(\varphi_M - \pi))$$

$$P_{-1} = K_1(A + B\cos(\varphi_M - \frac{\pi}{2}))$$

$$P_0 = A + B\cos\varphi_M \qquad\qquad (4)$$

$$P_1 = K_1(A + B\cos(\varphi_M + \frac{\pi}{2}))$$

$$P_2 = K_2(A + B\cos(\varphi_M + \pi))$$

Dabei sind A, B konstante Leistungen und $K_1$, $K_2$ gitterspezifische Proportionalitätsfaktoren, die das Verhältnis der Lichtleistungen in den ersten und zweiten Beugungsordnung relativ zur nullten Beugungsordnung definieren.

Mit diesen Leistungswerten, die gleichzeitig an den 5 entsprechenden Dioden des Zeilendetektors gemessen werden, läßt sich die Phasendifferenz $\phi_M$ wie folgt bestimmen:

$$\varphi_M = \tan^{-1}\left[\frac{K_2}{K_1}\frac{(2P_{-1} - P_1)}{(2K_2P_0 - P_2 - P_{-2})}\right] \bmod 2\pi \qquad\qquad (5)$$

Das erfindungsgemäße Verfahren ermöglicht die synchrone Erfassung mehrerer Meßwerte im Gegensatz zu der bisher angewandten Phasenschalttechnik, bei der die zu messende Phasendifferenz rechnerisch aus drei zeitlich aufeinanderfolgenden phasenverschobenen Leistungssignalen bestimmt wird. Diese Signale wurden bisher zeitlich versetzt durch Schalten des elektro-optischen Modulators erzeugt und mußten daher sequentiell verarbeitet werden. Im Gegensatz dazu werden bei der hier vorgeschlagenen neuen Methode die erforderlichen Einzelsignale gleichzeitig erstellt und sind daher parallel prozessierbar. Dies führt zu einer wesentlichen Steigerung der Messgeschwindigkeit und damit der Messzuverlässigkeit. Durch die Verwendung von mehr als drei Bestimmungsgrößen wird gleichzeitig eine Erhöhung der Messgenauigkeit erzielt.

Grundsätzlich lassen sich andere Phasenschalttechniken, die bisher auf sequentieller Signalverarbeitung basierten, in Parallelmethoden überführen. So kann beispielsweise der bisherige sequentielle Meßvorgang durch eine formal identische Parallelmethode ersetzt werden, wenn zwischen der nullten und den beiden ersten Beugungsordnungen die Phasenverschiebung $\pm\frac{2}{3}\pi$ beträgt. Die Leistungen der drei Beugungsordnungen sind in diesem Fall gegeben durch:

$$P_{-1} = K_1(A + B\cos(\varphi_M - \frac{2\pi}{3}))$$

$$P_0 = A + B\cos\varphi_M \qquad\qquad (6)$$

$$P_1 = K_1(A + B\cos(\varphi_M + \frac{2\pi}{3})).$$

Mit diesen gemessenen Leistungssignalen läßt sich die Phasendifferenz wie folgt bestimmen:

**EP 0 561 015 A1**

$$\varphi_M = \tan^{-1}\left[\frac{\sqrt{3}\,(P_1 - P_{-1})}{2P_0 K_1 - P_1 - P_{-1}}\right] \bmod 2\pi \qquad\qquad (7)$$

Diese Formel ist aber identisch mit Gleichung (2) mit

$P_0 K_1 = P_S$, $P_1 = P_R$ und $P_{-1} = P_T$.

Einem entsprechenden Verfahren, das mit einer Mindestzahl von drei Bestimmungsgleichungen auskommt, ist jedoch die oben diskutierte Methode mit fünf Bestimmungsgleichungen vorzuziehen, da mit zunehmender Zahl der auszuwertenden Leistungssignale auch die Anfälligkeit dieser Methode auf Störeinflüsse reduziert wird.

**Patentansprüche**

1. Verfahren zur interferometrischen Bestimmung von Phasendifferenzen zwischen zwei unterschiedlich polarisierten Lichtstrahlen (21, 22)
dadurch gekennzeichnet,
daS die unterschiedlich polarisierten Lichtstrahlen (21, 22) in mindestens drei Paare von Teilstrahlen (31, 41; 32, 42; ... ; 35, 45) aufgefächert werden,
die Teilstrahlen unterschiedlich phasenverschoben werden, wobei die Polarisationsrichtung einen Einfluß darauf hat, um welchen Betrag jeweils die Phase verschoben wird,
die phasenverschobenen Teilstrahlen ein Polarisationsfilter (15) durchlaufen, anschließend
die beiden unterschiedlich polarisierten Teilstrahlen jedes Paares (31, 41; 32, 42; ...; 35, 45) jeweils miteinander zur Interferenz gebracht werden, und
die entstehenden Intensitäten (P-2, P-1, P0, P + 1, P + 2) der interferierenden Teilstrahlen detektiert werden.

2. Verfahren nach Anspruch 1, dadurch gekennzeichnet, daß die Teilstrahlen zunächst in der Weise ausgerichtet werden, daß sie paarweise parallel und äquidistant zueinander verlaufen.

3. Verfahren nach Anspruch 2, dadurch gekennzeichnet, daß die parallel und äquidistant verlaufenden Teilstrahlen so individuell phasenverschoben werden, daß jeweils zwischen den zwei unterschiedlich polarisierten Teilstrahlen eines Paares (31, 41; ... 35, 45) eine Phasendifferenz entsteht, wobei sich die jeweiligen Phasendifferenzen benachbarter Paare von Teilstrahlen um einen konstanten Betrag unterscheiden.

4. Verfahren nach Anspruch 3, dadurch gekennzeichnet, daß der konstante Betrag des Phasendifferenz-Unterschieds benachbarter Paare von Teilstrahlen $\pi/2$ beträgt.

5. Verfahren nach einem der vorangehenden Ansprüche, dadurch gekennzeichnet, daß die interferierenden Teilstrahlen auf optische Sensoren (16) fokussiert werden.

6. Verfahren nach Anspruch 5, dadurch gekennzeichnet, daS die optischen Sensoren (16) elektrische Signale generieren und die elektrischen Signale über eine Auswerteeinheit so verarbeitet werden, daß die Phasendifferenz der unterschiedlich polarisierten Lichtstrahlen (21,22) direkt wiedergegeben wird.

7. Verfahren zur interferometrischen Messung von Oberflächenstrukturen, wobei Licht einer Beleuchtungsquelle (1) in zwei parallele, unterschiedlich polarisierte Strahlbündel (31,41) aufgespalten wird, die nebeneinander auf die zu untersuchende Oberfläche (6) fokussiert werden und wobei das von der Oberfläche reflektierte Licht (23) der verschiedenen Strahlbündel mittels einer phasensensitiven Detektoreinrichtung (11) aufgenommen wird,
dadurch gekennzeichnet, daß
die phasensensitive Detektoreinrichtung (11) Phasendifferenzen des aufgenommenen reflektierten Lichts (21,22) nach einem der in den vorangehenden Ansprüchen angegebenen Verfahren detektiert.

5

8. Vorrichtung zur Durchführung des Verfahrens nach einem der vorangehenden Ansprüche, dadurch gekennzeichnet, daß zur Auffächerung der unterschiedlich polarisierten Lichtstrahlen (21,22) in mehrere Teilstrahlen ein Strahlteiler oder ein Beugungsgitter, vorzugsweise ein Transmissions-Beugungsgitter (12), vorhanden ist.

9. Vorrichtung nach Anspruch 8, dadurch gekennzeichnet, daß sie ein phasenschiebendes Element (14) aufweist, das nach dem Prinzip des Babinet-Komparators (17,18) aufgebaut ist.

FIG. 1

# FIG. 2

# FIG. 3

Europäisches
Patentamt

**EUROPÄISCHER RECHERCHENBERICHT**

Nummer der Anmeldung

EP    92 10 4558

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | DE-A-2 127 483 (ERNST LEITZ GMBH)<br>* Einführung *<br>* Seite 12, Absatz 2 - Seite 13, Absatz 1; Abbildung 5 *<br><br>----- | 1-3,5-9 | G01B11/06<br>G01B 9/02 |

|  |  |  | RECHERCHIERTE SACHGEBIETE (Int. Cl.5 ) |
|---|---|---|---|
|  |  |  | G01B<br>G01D |

Der vorliegende Recherchenbericht wurde für alle Patentansprüche erstellt

| Recherchenort | Abschlußdatum der Recherche | Prüfer |
|---|---|---|
| DEN HAAG | 13 NOVEMBER 1992 | VISSER F.P.C. |